# EUROPEAN PATENT APPLICATION

(11) **EP 4 704 295 A1**
(43) Date of publication of application: **04.03.2026**
(21) Application number: 25197779.9
(22) Date of filing: 25.08.2025
(51) Int. Cl.: H02J 7/00

(54) **MATERIAL HANDLING VEHICLE BATTERY WITH ADVANCED CHARGING FEATURES**

(30) Priority: 28.08.2024 US 202463688194 P
(71) Applicant: The Raymond Corporation, Greene, NY 13778 (US)
(72) Inventor: FOLEY, Robert S., Rochester, NY 14610 (US); HARRIS, Daniel, Honeoye Falls, NY 14472 (US); BARTER, Stuart, Livonia, NY 14487 (US); GRIFFITH, Kim, Honeoye Falls, NY 14472 (US); DICKINSON, Blake, Monrovia, CA 91016 (US)
(74) Representative: Zacco Sweden AB

(57) **Abstract**

An industrial battery design for use in a material handling vehicle (100). The battery (200) includes a controller (230) and a charger connector port (210) connectable to a charger device (310) to charge the battery (200). The charger connector port (210) includes a proximity sensor (212) and a temperature sensor (214) communicatively coupled to the controller (230). The controller (230) includes circuitry configured to prevent movement of the material handling vehicle (100) when the proximity sensor (212) indicates that the charger device (310) is connected to the charger connector port (210), provide an indication of an incomplete connection between the charger device (310) and the charger connector port (210) based on data received from the proximity sensor (212), and provide an indication indicating that the charger connector port (210) has a change in condition based on temperature data received from the temperature sensor (214).

## Description

### CROSS-REFERENCE TO RELATED APPLICATIONS

This application claims the benefit of and priority to U.S. Provisional Patent Application No. 63/688,194 filed August 28, 2024, the entirety of which is incorporated by reference herein.

### BACKGROUND

Various types of batteries have been used to provide power to material handling vehicles (MHVs) and to provide power in other industrial applications. However, improved industrial battery designs are generally desired.

### BRIEF SUMMARY

The present disclosure relates generally to an industrial battery design that includes advanced charging features.

In one aspect, the disclosure provides a material handling vehicle. The material handling vehicle includes a battery compartment and a battery disposed within the battery compartment. The battery includes a controller and a charger connector port connectable to a charger device to charge the battery. The charger connector port includes a proximity sensor and a temperature sensor communicatively coupled to the controller. The controller includes circuitry configured to prevent movement of the material handling vehicle when the proximity sensor indicates that the charger device is connected to the charger connector port and to provide an indication that a condition of the charger connector port has changed based on temperature data received from the temperature sensor.

In another aspect, the disclosure provides a battery. The battery includes a controller and a charger connector port connectable to a charger device to charge the battery. The charger connector port includes a proximity sensor and a temperature sensor communicatively coupled to the controller. The controller includes circuitry configured to prevent movement of the material handling vehicle when the proximity sensor indicates that the charger device is connected to the charger connector port and to provide an indication that a condition of the charger connector port has changed based on temperature data received from the temperature sensor.

In yet another aspect, the disclosure provides another battery. The battery includes a controller and a charger connector port connectable to a charger device to charge the battery. The charger connector port includes a proximity sensor and a temperature sensor communicatively coupled to the controller. The controller includes circuitry configured to prevent movement of the material handling vehicle when the proximity sensor indicates that the charger device is connected to the charger connector port, provide a first indication of an incomplete connection between the charger device and the charger connector port based on data received from the proximity sensor, and provide a second indication that a condition of the charger connector port has changed based on temperature data received from the temperature sensor.

The foregoing and other aspects and advantages of the present disclosure will appear from the following description. In the description, reference is made to the accompanying drawings which form a part hereof, and in which there is shown by way of illustration a preferred configuration of the disclosure. Such configuration does not necessarily represent the full scope of the disclosure, however, and reference is made therefore to the claims and herein for interpreting the scope of the present disclosure.

### BRIEF DESCRIPTION OF THE DRAWINGS

The present disclosure will be better understood and features, aspects, and advantages other than those set forth above will become apparent when consideration is given to the following detailed description thereof. Such detailed description references the following drawings.
FIG. 1 is a perspective illustration of an example material handling vehicle including a battery compartment for an industrial battery, in accordance with some aspects of the disclosure.
FIG. 2 is a block diagram illustrating components of an example battery that can be used with the material handling vehicle of FIG. 1, in accordance with some aspects of the disclosure.
FIG. 3 is an illustration showing an example battery case for the battery of FIG. 2, in accordance with some aspects of the disclosure.
FIG. 4 is an illustration showing an example lid assembly for the battery of FIG. 2, in accordance with some aspects of the disclosure.
FIG. 5 is an exploded view showing example components of the lid assembly of FIG. 4, in accordance with some aspects of the disclosure.
FIG. 6 is an illustration showing components of an example electronics tray for the battery of FIG. 2, in accordance with some aspects of the disclosure.
FIG. 7 is an example schematic diagram showing various components of the battery of FIG. 2, in accordance with some aspects of the disclosure.
FIG. 8 is a flowchart illustrating an example process for managing the charger connector ports of the battery of FIG. 2, in accordance with some aspects of the disclosure.
FIG. 9 is a flowchart illustrating an example process for managing the battery of FIG. 2 and the material handling vehicle of FIG. 1 during charging of the battery of FIG. 2, in accordance with some aspects of the disclosure.

### DETAILED DESCRIPTION

Before any aspects of the invention are explained in detail, it is to be understood that the invention is not limited in its application to the details of construction and the arrangement of components set forth in the following description or illustrated in the following drawings. The invention is capable of other aspects and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use aspects of the present disclosure. Various modifications to the illustrated aspects will be readily apparent to those skilled in the art, and the generic principles herein can be applied to other aspects and applications without departing from aspects of the present disclosure. Thus, aspects of the present disclosure are not intended to be limited to aspects shown but are to be accorded the widest scope consistent with the principles and features disclosed herein. The following detailed description is to be read with reference to the figures, in which like elements in different figures have like reference numerals. The figures, which are not necessarily to scale, depict selected aspects and are not intended to limit the scope of aspects of the present disclosure. Skilled artisans will recognize the examples provided herein have many useful alternatives and fall within the scope of aspects of the present disclosure.

It is also to be appreciated that material handling vehicles (MHVs) are designed in a variety of classes and configurations to perform a variety of tasks. It will be apparent to those of skill in the art that the present disclosure is not limited to any specific MHV, and can also be provided with various other types of MHV classes and configurations, including for example, lift trucks, forklift trucks, reach trucks, SWING REACH^{®} vehicles, turret trucks, side loader trucks, counterbalanced lift trucks, pallet stacker trucks, order pickers, transtackers, tow tractors, and man-up trucks, and can be commonly found in warehouses, factories, shipping yards, and, generally, wherever pallets, large packages, or loads of goods can be required to be transported from place to place. The various systems and methods disclosed herein are suitable for any of operator controlled, pedestrian controlled, remotely controlled, and autonomously controlled material handling vehicles. Further, the various systems and methods disclosed herein are suitable for other vehicles, such as automobiles, busses, trains, tractor-trailers, farm vehicles, factory vehicles, and the like.

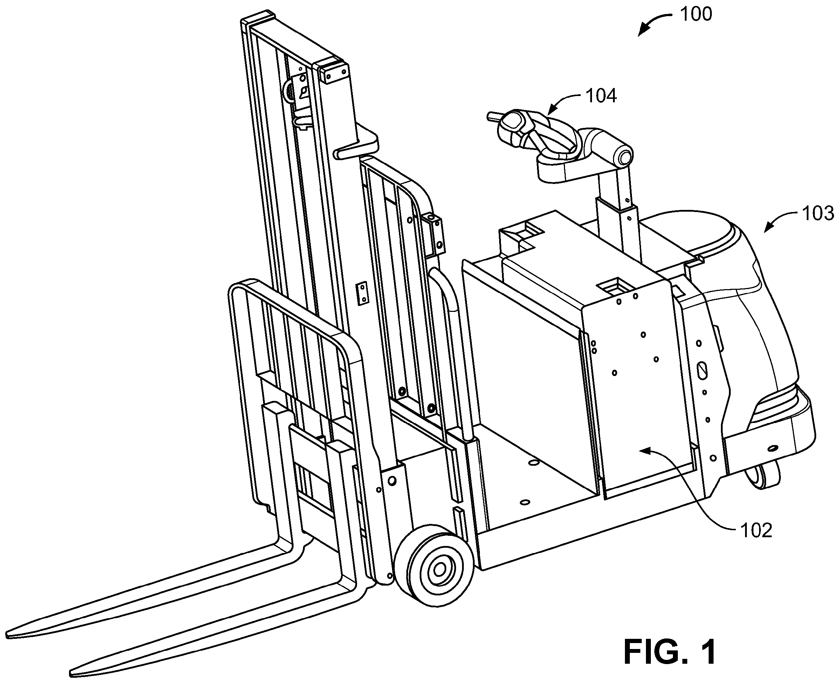

Referring to FIG. 1, a perspective illustration showing an example material handling vehicle 100 is shown, in accordance with some aspects of the disclosure. In the example of FIG. 1, the material handling vehicle 100 is a forklift truck. The material handling vehicle 100 is shown to include a battery compartment 102, a power section 103, and a handle 104. The power section 103 can include any suitable power electronics and other components for operating the material handling vehicle 100. The handle 104 can be used by an operator of the material handling vehicle 100 to steer the material handling vehicle 100. The battery compartment 102 can be used to install and house an industrial battery that powers the material handling vehicle 100, such as the various modular industrial battery configurations described below. The battery compartment 102 in the material handling vehicle 100 can include terminals, ports, wiring, and other components for connecting an industrial battery to the material handling vehicle 100. It will be appreciated that, depending on the type and configuration of material handling vehicle, battery compartments similar to the battery compartment 102 can be provided in a variety of locations and configurations.

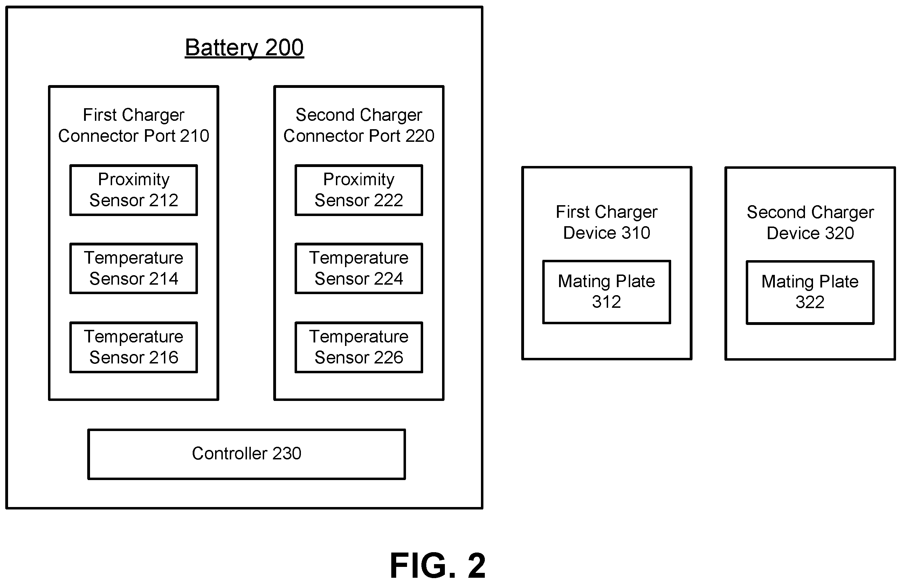

Referring to FIG. 2, a block diagram illustrating components of an example battery 200 that can be used with the material handling vehicle 100 is shown, in accordance with some aspects of the disclosure. In particular, the battery 200 can be a sealed battery and can be disposed within the battery compartment 102 of the material handling vehicle 100. As shown in FIG. 2, the battery 200 can include a first charger connector port 210, a second charger connector port 220, and a controller 230. Additionally, the first charger connector port 210 can include a proximity sensor 212, a temperature sensor 214, and a temperature sensor 216. The second charger connector port 220 can likewise include a proximity sensor 222, a temperature sensor 224, and a temperature sensor 226. FIG. 2 also shows a first charger device 310 including a mating plate 312 that can be connected to the first charger connector port 210 (or the second charger connector port 220) to charge the battery 200 and a second charger device 320 including a mating plate 322 that can be connected to the second charger connector port 220 (or the first charger connector port 210) to charge the battery 200.

When charging the battery 200, either one of the first charger connector port 210 or the second charger connector port 220 can be used, or both the first charger connector port 210 and the second charger connector port 220 can be used. As a result, the first charger connector port 210 and the second charger connector port 220 can provide modular charge rate functionality for the battery 200. For example, if an operator of the material handling vehicle 100 connects the first charger device 310 to the first charger connector port 210 to charge the battery 200, the first charger device 310 can provide between 200-300 amperes of current to charge the battery 200, depending on the specific modular configuration of the battery 200 (e.g., the number, type, and/or configuration of battery cells included in the battery 200). Similarly, if the operator of the material handling vehicle 100 connects the second charger device 320 to the second charger connector port 220 to charge the battery 200, the second charger device 320 can provide between 200-300 amperes of current to charge the battery 200, depending on the specific modular configuration of the battery 200.

If the operator material handling vehicle 100 connects both the first charger device 310 to the first charger connector port 210 and the second charger device 320 to the second charger connector port 220 to charge the battery 200, the first charger device 310 and the second charger device 320 can provide between 400-600 amperes of current to charge the battery 200, depending on the specific modular configuration of the battery 200. Accordingly, the operator of the material handling vehicle 100 can charge the battery 200 faster because the charge rate for the battery 200 can be greater when the operator connects both the first charger device 310 to the first charger connector port 210 and the second charger device 320 to the second charger connector port 220 to charge the battery 200 than when the operator connects either the first charger device 310 to the first charger connector port 210 or the second charger device 320 to the second charger connector port 220 to charge the battery 200. This functionality can provide advantages in terms of charging efficiency for the battery 200 as well as managing components of the battery 200 and/or material handling vehicle 100.

The controller 230 can implement a controlled current ramp handshake when charging the battery 200 via the first charger device 310 and/or the second charger device 320. For example, starting at a low pilot current, the controller 230 can step up the output current drawn from the first charger device 310 and/or the second charger device 320 in fixed increments while the controller 230 samples the current on the first charger connector port 210 and/or the second charger connector port 220. The controller 230 determine that the first charger device 310 is connected to the first charger connector port 210 and that the second charger device 320 is connected to the second charger connector port 220 if both of the sampled currents are rising (e.g., within a configurable window). However, if the sampled currents diverge in proportion to the ramp, the controller 230 can determine that only one of the first charger device 310 or the second charger device 320 are present. The controller 230 can maintain a binary flag that indicates whether one or both of the first charger device 310 and the second charger device 320 are connected before beginning full rate charging. The controller 230 can additionally or alternatively update the binary flag based on data from the proximity sensor 212 and/or the proximity sensor 222. Then, the controller 230 can shape its current requests based on the binary flag and various parameters (e.g., charge ratings, etc.) associated with the first charger device 310, the first charger connector port 210, the second charger device 320, and/or the second charger connector port 220.

The first charger connector port 210 and the second charger connector port 220 can be implemented using various suitable types and configurations of connectors. For example, the first charger connector port 210 and the second charger connector port 220 can be implemented using female connector assemblies that connect to male connector assemblies that are included on the first charger device 310 and the second charger device 320. Similarly, the proximity sensor 212, the temperature sensor 214, the temperature sensor 216, the proximity sensor 222, the temperature sensor 224, and the temperature sensor 226 can be implemented using various suitable types and configurations of sensors. For example, the temperature sensor 214, the temperature sensor 216, the temperature sensor 224, and the temperature sensor 226 can be implemented as thermistors that are disposed within the first charger connector port 210 and the second charger connector port 220, respectively. The proximity sensor 212 and the proximity sensor 222 can be implemented as capacitive or inductive proximity sensors, for example, that are also disposed within the first charger connector port 210 and the second charger connector port 220, respectively.

The first charger device 310 and the second charger device 320 can be implemented using various suitable types and configurations of charger devices. For example, the first charger device 310 and the second charger device 320 can be wall-mounted charged devices that are installed in a designated charging location for material handling vehicles that operate in a warehouse facility. The mating plate 312 can be affixed to the first charger device 310 such that the mating plate 312 trips the proximity sensor 212 upon a connection between the first charger device 310 and the first charger connector port 210 of the battery 200. As such, the proximity sensor 212 can provide data to the controller 230 indicating both (a) whether the first charger device 310 is connected to the first charger connector port 210 of the battery 200, and (b) whether the connection between the first charger device 310 and the first charger connector port 210 of the battery 200 is complete or is incomplete. Similarly, the mating plate 322 can be affixed to the second charger device 320 such that the mating plate 322 trips the proximity sensor 222 upon a connection between the second charger device 320 and the second charger connector port 220 of the battery 200. As such, the proximity sensor 222 can provide data to the controller 230 indicating both (a) whether the second charger device 320 is connected to the second charger connector port 220 of the battery 200, and (b) whether the connection formed between the second charger device 320 and the second charger connector port 220 of the battery 200 is complete or is incomplete. The mating plate 312 and the mating plate 322 can be implemented using various suitable materials and configurations based on the intended application.

The temperature sensor 214 and the temperature sensor 216 can be strategically located within the first charger connector port 210 such that the temperature sensor 214 and the temperature sensor 216 can provide temperature data to the controller 230 that is indicative of a change in condition or a potential change in condition to the first charger connector port 210. For example, the temperature sensor 214 can be strategically located near a first female receptacle of the first charger connector port 210 that receives a first conductive male pin on the first charger device 310, and the temperature sensor 216 can be strategically located near a second female receptacle of the first charger connector port 210 that receives a second conductive male pin on the first charger device 310. In this design, the temperature sensor 214 can provide temperature data indicative of a temperature associated with the first female receptacle of the first charger connector port 210 to the controller 230 and the temperature sensor 216 can provide temperature data indicative of a temperature associated with the second female receptacle of the first charger connector port 210 to the controller 230.

Similarly, the temperature sensor 224 and the temperature sensor 226 can be strategically located within the second charger connector port 220 such that the temperature sensor 224 and the temperature sensor 226 can then provide temperature data to the controller 230 that is indicative of a change in condition or potential change in condition to the second charger connector port 220. For example, the temperature sensor 224 can be strategically located near a first female receptacle of the second charger connector port 220 that receives a first conductive male pin on the second charger device 320, and the temperature sensor 226 can be strategically located near a second female receptacle of the second charger connector port 220 that receives a second conductive male pin on the second charger device 320. In this design, the temperature sensor 224 can provide temperature data that is indicative of a temperature associated with the first female receptacle of the second charger connector port 220 to the controller 230 and the temperature sensor 226 can provide temperature data that is indicative of a temperature associated with the second female receptacle of the second charger connector port 220 to the controller 230.

The controller 230 can use the temperature data provided by the temperature sensor 214, the temperature sensor 216, the temperature sensor 224, and the temperature sensor 226 to detect a potential change in condition to the first charger connector port 210 and/or to the second charger connector port 220 in various ways. For example, the controller 230 can compare the temperature data received from the temperature sensor 214, the temperature sensor 216, the temperature sensor 224, and the temperature sensor 226 to one or more thresholds to determine that the first charger connector port 210 and/or to the second charger connector port 220 are worn before the first charger connector port 210 and/or to the second charger connector port 220 experience excessive heat. Additionally, the controller 230 can use the temperature data that is provided by the temperature sensor 214, the temperature sensor 216, the temperature sensor 224, and the temperature sensor 226 to control charging of the battery 200. For example, the controller 230 can use the temperature data that is provided by the temperature sensor 214, the temperature sensor 216, the temperature sensor 224, and the temperature sensor 226 to derate the charging of the battery 200 through the first charger connector port 210 and/or to the second charger connector port 220 (e.g., by reducing the amount of current drawn from the first charger device 310 and/or the second charger device 320) responsive to determining that the temperature data received from the temperature sensor 214, the temperature sensor 216, the temperature sensor 224, and/or the temperature sensor 226 exceeds one or more thresholds.

The controller 230 can also provide various types of indications based on the data received from the proximity sensor 212, the temperature sensor 214, the temperature sensor 216, the proximity sensor 222, the temperature sensor 224, and the temperature sensor 226. For example, responsive to determining that the temperature data received from any of the temperature sensor 214, the temperature sensor 216, the temperature sensor 224, and/or the temperature sensor 226 exceeds one or more thresholds, the controller 230 can provide an indication (e.g., by sending a signal to the material handling vehicle 100, by sending a signal to a computing device, by causing an indication message to be displayed on a display of the battery 200 or another display, etc.) indicating that the first charger connector port 210 and/or the second charger connector port 220 has changed in condition (e.g., worn, altered, excessive heat, etc.). Additionally, responsive to determining that the data received from the proximity sensor 212 and/or the proximity sensor 222 indicates that the first charger device 310 and/or the second charger device 320 is at least partially connected to the first charger connector port 210 and/or to the second charger connector port 220, the controller 230 can prevent movement of the material handling vehicle 100 (e.g., by sending a signal to the material handling vehicle 100). Moreover, responsive to determining that the data received from the proximity sensor 212 and/or the proximity sensor 222 indicates an incomplete (partial) connection between the first charger device 310 and/or the second charger device 320 and the first charger connector port 210 and/or the second charger connector port 220, the controller 230 can provide an indication (e.g., by sending a signal to the material handling vehicle 100, by sending a signal to a computing device, by causing an indication message to be displayed on a display of the battery 200 or another display, etc.) of the incomplete connection.

The battery 200 can also include additional sensors to perform functions pertaining to the first charger connector port 210 and/or the second charger connector port 220 (e.g., additional temperature sensors, additional proximity sensors, pressure sensors, optical sensors, infrared sensors, etc.). For example, the battery 200 can include one or more voltage differential sensors that can be implemented in a variety of manners. The data generated by the voltage differential sensors can be indicative of a first voltage associated with the first charger connector port 210 when the first charger device 310 is connected to the first charger connector port 210 and a second voltage associated with the second charger connector port 220 when the second charger device 320 is connected to the second charger connector port 220. The controller 230 can then use the data from the voltage differential sensors to determine if an imbalance between the first voltage and the second voltage exists. If the controller 230 does determine that an imbalance between the first voltage and the second voltage exists based on the data from the voltage differential sensors, then the controller 230 can determine that a change in condition has occurred (e.g., a change in resistance, etc.) for the first charger connector port 210 and/or the second charger connector port 220.

The battery 200 can also include one or more current sensors that can be implemented in a variety of manners (e.g., the Hall effect sensor 458 as detailed below). The data generated by the current sensors can be indicative of a first current associated with the first charger connector port 210 when the first charger device 310 is connected to the first charger connector port 210 and a second current associated with the second charger connector port 220 when the second charger device 320 is connected to the second charger connector port 220. The controller 230 can then use the data from the current sensors to determine if an imbalance between the first current and the second current exists. If the controller 230 does determine that an imbalance between the first current and the second current exists based on the data from the current sensors, then the controller 230 can determine that a change in condition has occurred (e.g., a change in resistance, etc.) for the first charger connector port 210 and/or the second charger connector port 220. The controller 230 can also detect that a connection is missing or incomplete (e.g., a connection between the first charger device 310 and the first charger connector port 210, a connection between the second charger device 320 and the second charger connector port 220).

The battery 200 can also include one or more resistance sensors that can be implemented in a variety of manners. The data generated by the resistance sensors can be indicative of a first resistance associated with the first charger connector port 210 when the first charger device 310 is connected to the first charger connector port 210 and a second resistance associated with the second charger connector port 220 when the second charger device 320 is connected to the second charger connector port 220. The controller 230 can then use the data from the resistance sensors to determine if an imbalance between the first resistance and the second resistance exists. If the controller 230 does determine that an imbalance between the first resistance and the second resistance exists based on the data from the resistance sensors, then the controller 230 can determine that a change in condition has occurred for the first charger connector port 210 and/or the second charger connector port 220.

The controller 230 can be implemented in various ways within the battery 200, including by using one or multiple separate controller devices. For example, the controller 230 can include various suitable types of processing circuitry (e.g., one or more central processing units (CPUs), etc.) and memory (e.g., volatile, non-volatile, random-access memory (RAM), read-only memory (ROM), electrically erasable programmable read-only memory (EEPROM), etc.). The memory can include one or more non-transitory machine-readable storage media having instructions stored thereon that, when executed by the processing circuitry, cause the processing circuitry to perform various operations in accordance with the instructions. The controller 230 can also include various suitable types of communications interfaces for communicating via various suitable protocols (e.g., a controller area network (CAN) interface for communicating via a CAN bus, an Ethernet interface, a serial communications interface, etc.). The controller 230 can then communicate with various components of the battery 200 (e.g., the proximity sensor 212, the temperature sensor 214, the temperature sensor 216, the proximity sensor 222, the temperature sensor 224, and the temperature sensor 226, etc.), with the material handling vehicle 100 (e.g., a vehicle controller of the material handling vehicle 100, etc.), and/or with other computing devices (e.g., a server, a personal computing device, etc.).

The controller 230 can, in some examples, be configured to store connection counts for the first charger connector port 210 and/or the second charger connector port 220 in memory. For example, each time the controller 230 detects the presence of a connection between the first charger device 310 and/or the second charger device 320 and the first charger connector port 210 and/or the second charger connector port 220, the controller 230 can increment a connection count in memory for the first charger connector port 210 and/or the second charger connector port 220. The controller 230 can then use the connection counts to determine that the end of a cycle has occurred for the first charger connector port 210 and/or the second charger connector port 220 (e.g., responsive to the respective connection count exceeding a threshold, etc.). Responsive to determining that the end of a cycle has occurred for the first charger connector port 210 and/or the second charger connector port 220, the controller 230 can provide an indication that the end of a cycle has occurred for the first charger connector port 210 and/or the second charger connector port 220. For example, the controller 230 can cause an indication to be presented on a display of the battery 200, cause an indication to be displayed on a display of the material handling vehicle 100 (e.g., by a sending a signal to a controller on the material handling vehicle 100), cause an indication sound to be played, cause an indication to be presented via a computing device (e.g., by sending a signal to a server, by sending a signal to the computing device (e.g., a mobile phone, a tablet, a personal computer, a wearable device, etc.)), and/or other suitable methods for providing the indication.

Additionally, the first charger connector port 210 and/or the second charger connector port 220 can include various suitable feedback indicating mechanisms to facilitate efficiencies in the charging process for the battery 200. For example, the battery 200 can include one or more light indicators (e.g., light-emitting diodes (LEDs)) located within and/or near the first charger connector port 210 and/or the second charger connector port 220, and the controller 230 can illuminate and/or change the color of the light indicators responsive to detecting various conditions (e.g., a complete connection between the first charger device 310 and the first charger connector port 210, a partial connection between the first charger device 310 and the first charger connector port 210, a complete connection between the second charger device 320 and the second charger connector port 220, a partial connection between the second charger device 320 and the second charger connector port 220, etc.). Also, the battery 200 can include one or more detents and/or other suitable mechanisms that provide feedback (e.g., a "click") to indicate a complete connection between the first charger device 310 and the first charger connector port 210 and/or a complete connection between the second charger device 320 and the second charger connector port 220, for example. Moreover, the battery 200 can include various suitable feedback mechanisms (e.g., light indicators, other visual feedback mechanisms, auditory feedback, etc.) to indicate the charging progress for the battery 200 (e.g., charge started, charge in progress, charge complete, etc.).

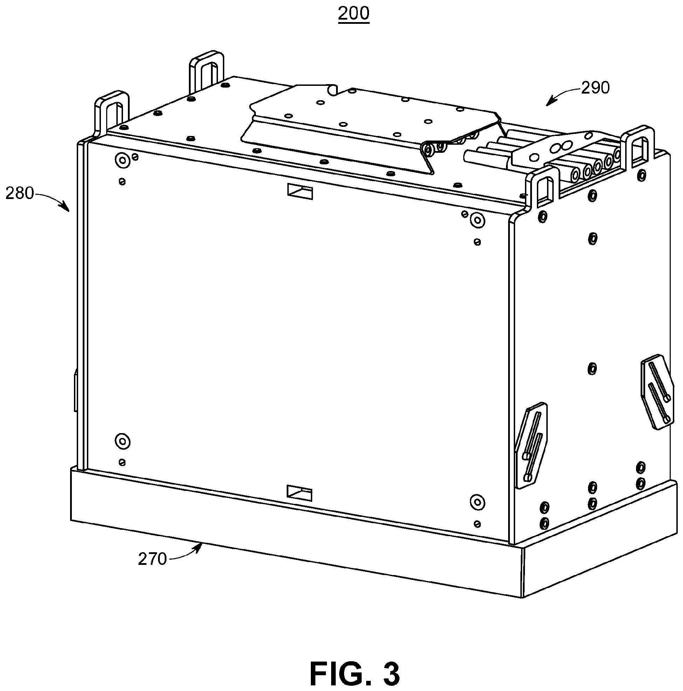

Referring to FIG. 3, an illustration showing an example implementation of a battery case 280 for the battery 200 is shown, in accordance with some aspects of the disclosure. Along with a metal base plate 270, the battery case 280 can be used to provide a sealed enclosure that protects internal components of the battery 200 (e.g., the battery cells, the electronics tray 400 as detailed below, etc.) from environmental factors. For example, the sealed enclosure formed by the battery case 280 and the metal base plate 270 can protect the internal components of the battery 200 from ingress of dust, liquid, chemicals, and other potential contaminants. The metal base plate 270 can be formed using a variety of suitable metals (e.g., steel, aluminum, etc.) and can have different dimensions depending on the intended application of the battery 200. The metal base plate 270 can generally provide structure to serve as a base for the battery 200. The battery case 280 can also be formed using various suitable materials (e.g., bent sheet steel, aluminum, etc.) and can be bolted to the metal base plate 270 to form the sealed enclosure, for example. The battery 200 can include lithium iron phosphate (LFP) battery cells in varying types (e.g., capacity, energy density, voltage range, nominal voltage, weight) and configurations (e.g., 1 row x 2 cells per row, 1 row x 3 cells per row, 2 rows x 2 cells per row, 2 rows x 3 cells per row, etc.) that are protected by this sealed enclosure.

Also shown in FIG. 3, the battery 200 can include a lid assembly 290 that can be disposed above the battery case 280. More specifically, the lid assembly can be positioned on a top surface of the battery case 280 (e.g., the surface opposite the metal base plate 270) and secured to the battery case 280 (e.g., via bolting). The lid assembly can include both the first charger connector port 210 and the second charger connector port 220 as detailed above, for example. The battery case 280, the lid assembly 290, and/or the metal base plate 270 can include components that help form a sealed enclosure including, for example, gaskets, compression limiters, etc. In some examples, the metal base plate 270 and/or the lid assembly 290 can be considered part of the battery case 280 itself. Depending on the specific modular configuration of the battery 200, the battery case 280 can have different dimensions for a given application.

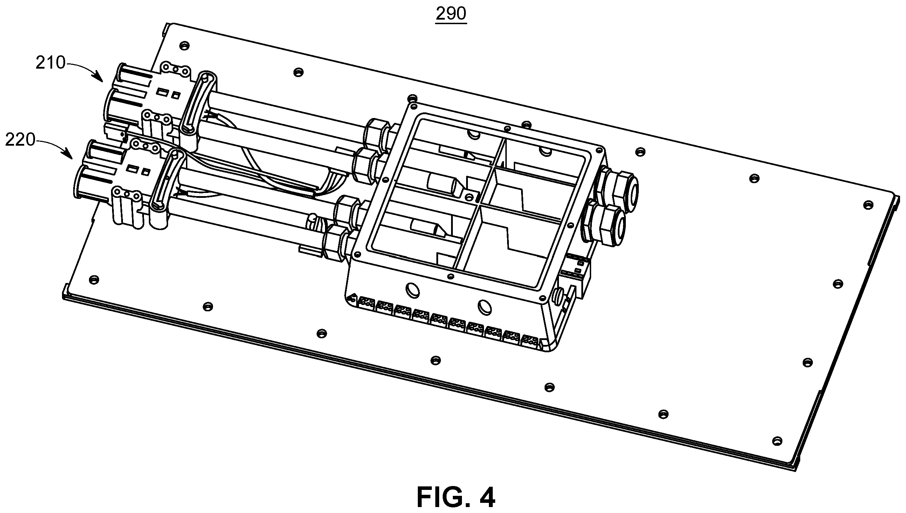

Referring to FIG. 4, an illustration showing an example isolated view of the lid assembly 290 is shown, in accordance with some aspects of the disclosure. As shown, both the first charger connector port 210 and the second charger connector port 220 can be disposed above the top surface of the lid assembly (e.g., the surface opposite the battery case 280) and about an outer periphery of the lid assembly 290. The first charger connector port 210 and the second charger connector port 220 can generally be located in close proximity relative to one another to provide ease of access for connecting the first charger device 310 and the second charger device 320, respectively, to charge the battery 200. The illustration provided in FIG. 4 shows just an example implementation of the first charger connector port 210 and the second charger connector port 220 as part of the lid assembly 290, and it not intended to be limiting.

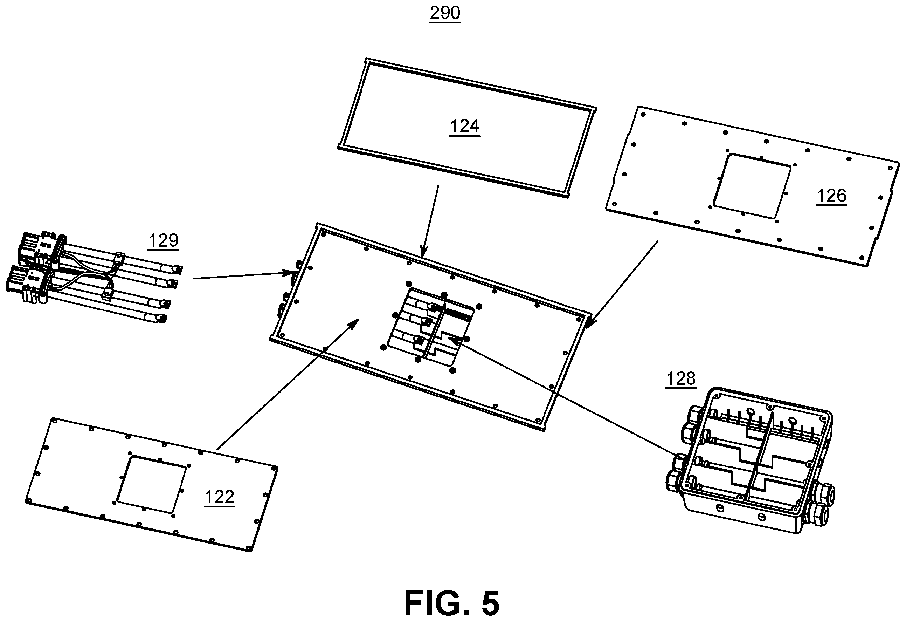

Referring to FIG. 5, an exploded view showing example components of the lid assembly 290 is shown, in accordance with some aspects of the disclosure. As shown, the lid assembly 290 can include a compression limiter 122, a gasket 124, a metal lid 126, a turret housing 128, and various cable assemblies 129. The lid assembly 290 can be connected to the battery case 280 during manufacturing of the battery 200 such that, in the final structure of the battery 200, the lid assembly 290 is positioned above the top surface of the battery case 280. The gasket 124 can generally be designed to seal a gap between the battery case 280 and the lid assembly 290 such that, when the lid assembly 290 is attached to the battery case 280, the gasket 124 forms a sealed enclosure for one or more battery cells of the battery 200. The gasket 124 can be constructed using a variety of suitable materials and can take a variety of different shapes. For example, the gasket 124 can be constructed using various types of rubber materials and combinations thereof.

The compression limiter 122 can generally protect the lid assembly 290 during events when compressive loads are applied to the lid assembly 290 and to the battery 200 more generally. The compression limiter 122 can also protect the gasket 124 in scenarios where no compressive load is applied. For example, the compression limiter 122 can prevent crushing of the gasket 124 during assembly of the battery 200, where significant torque may be applied to various bolts (e.g., bolts for securing the lid assembly 290 to the battery case 280) as part of the assembly process. Without the compression limiter 122, it may not be possible to secure the lid assembly 290 to the battery case 280 while also having sufficiently secured (torqued) bolts and a functioning seal. The compression limiter 122 can be constructed using a variety of suitable materials and can take a variety of different shapes depending on the intended application. For example, the compression limiter 122 can be constructed using various types of metals (e.g., steel, aluminum, etc.) and combinations thereof.

The metal lid 126 can generally serve as a protective lid structure for the battery 200 and can also be implemented in a variety of ways. For example, similar to the battery case 280, the metal lid 126 be implemented using flat plate steel, among other possible types of metals and combinations thereof. The turret housing 128 can be used to hold and protect the cable assemblies 129. The turret housing 128 can be constructed using a variety of suitable materials, such as various types of electrically insulated rubber materials. The cable assemblies 129 can include any suitable cables for connecting the battery 200 to the material handling vehicle 100 and/or charger cables for the industrial battery. For example, the cable assemblies 129 can be coupled to the first charger connector port 210 and the second charger connector port 220 to carry electrical current from the first charger device 310 and the second charger device 320, respectively, to charge the battery 200.

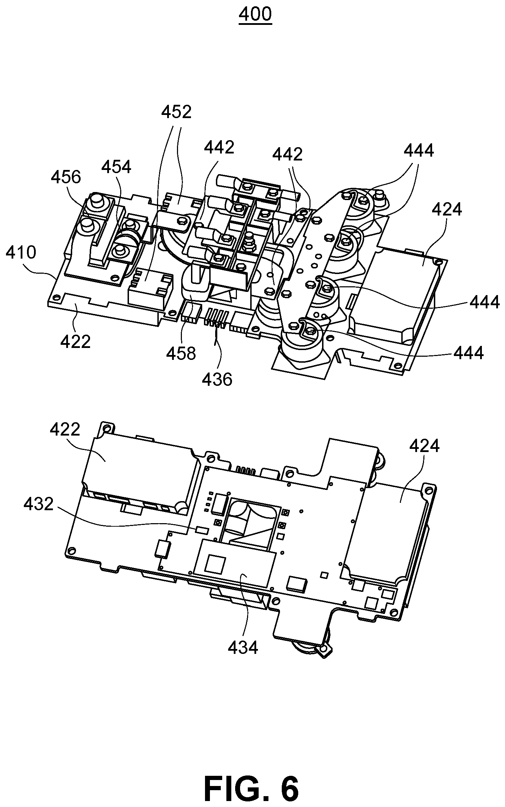

Referring to FIG. 6, an illustration showing components of an example electronics tray 400 that can be included in the battery 200 is shown, in accordance with some aspects of the disclosure. The electronics tray 400 can be disposed within the battery case 280 such that the electronics tray is positioned above the battery cells of the battery 200 but below the lid assembly 290. For example, the electronics tray 400 can be secured to a top metal tray that is positioned above the battery cells of the battery 200. FIG. 6 in particular shows both a top view and a bottom view of the electronics tray 400. As shown, the electronics tray 400 can include a main controller 422, sub controllers 424, an interface board 432, a communications board 434, communication ports 426, main contactors 442, series contactors 444, heater relays 452, a system fuse 454, a shunt 456, and a Hall effect sensor 458. Each of these components of the electronics tray 400 can be formed on a metal base plate 410 of the electronics tray 400 as shown in FIG. 4. The controller 230 as shown in FIG. 2 can be implemented in a variety of ways. For example, the controller 230 can encompass both the main controller 422 and the sub controllers 424 of the electronics tray 400 in some examples, or the controller 230 can encompass the main controller 424 of the electronics tray 400, among other possible implementations of the controller 230.

The metal base plate 410 of the electronics tray 400 can be formed using a variety of suitable metals (e.g., steel, aluminum, etc.) and can have different dimensions depending on the intended application of the battery 200. The metal base plate 410 can generally provide structure to serve as a base for the electronics tray 400. The main controller 422 and the sub controllers 424 can be implemented using various suitable types of electronic controller components. The main controller 422 and the sub controllers 424 can each include various types of processing circuitry and various types of memory storing non-transitory machine-readable instructions that, when executed by the processing circuitry of the main controller 422 and the sub controllers 424, respectively, cause the main controller 422 and the sub controllers 424 to implement operations according to the machine-readable instructions. The main controller 422 can interact with the sub controllers 424 such that the main controller 422 acts as the main initiator of control transactions and the sub controllers 424 respond to communications receive from the main controller 422. The main controller 422 and the sub controllers 424 can operate as separate modules as part of a battery management system (BMS) of the battery 200.

The interface board 432 and the communications board 434 can both be implemented as printed circuit boards (PCBs), among other possible implementations. The interface board 432 can include circuitry for providing various electronic interfaces between components of the battery 200. For example, the interface board 432 can include circuitry to provide an electronic interface between the main controller 422 and the sub controllers 424, to provide an interface between the controller 230 and various sensors included as part of the battery 200 (e.g., to communicatively couple the controller 230 to the sensors). The communications board 434 can include circuitry to provide communications between the battery 200 and the material handling vehicle 100 (e.g., an interface between the battery 200 and one or more controllers on the material handling vehicle 100). The communication ports 436 can be communicatively coupled to the interface board 432 and/or to the communications board 434 and can be used to form various electrical connections between the battery 200 and external components and devices (e.g., to wire the battery 200 to one or more controllers on the material handling vehicle 100, etc.).

The main contactors 442 can include any suitable number of primary contactors used to disconnect components of the battery 200 (e.g., to cut off current flow in a circuit under certain operating conditions). The series contactors 444 can likewise include any suitable number of contactors used to disconnect components of the battery 200 (e.g., to cut off current flow in a circuit under certain operating conditions). The main contactors 442 can be common across all modular configurations of the battery 200 (e.g., 1x1 cell configuration, 2x2 cell configuration, etc.) and the series contactors 444 can vary depending on the specific modular configuration of battery 200 (e.g., the series contactors 444 can include two contactors for smaller battery sizes and four contactors for larger battery sizes). Both the main contactors 442 and the series contactors 444 can be implemented using various suitable types and configurations of contactors. Further, the main contactors 442 and the series contactors 444 can be implemented using other suitable components in some applications (e.g., different types of switches, relays, etc.).

The heater relays 452 can generally be used to control operation of one or more heaters to provide heat to the battery cells of the battery 200. For example, upon power up of the battery 200, the ability to provide heat to the battery cells via one or more heaters can help the battery 200 reach a steady operational state than may otherwise be possible without the inclusion of the one or more heaters. The heater relays 452 can be implemented using various suitable types and configurations of relays, and the heaters can be implemented using various suitable types and configurations of heaters. Further, the heater relays 452 can be implemented using other suitable components in some applications (e.g., different types of switches, contactors, etc.). The battery 200 can include one of the heater relays 452 and one connected heater for each row of battery cells used in the battery 200, for example (e.g., a first heater and a first heater relay for a first battery cell row, and a second heater and a second heater relay for a second battery cell row).

The system fuse 454 can be used in the battery 200 to provide overcurrent protection for the battery 200 by interrupting current flow through the battery 200. The system fuse 454 can be implemented using various types and configurations of fuses depending on the application of the battery 200. Similarly, the shunt 456 can be used in the battery 200 to provide further overcurrent protection for the battery 200 by diverting current flow within the battery 200. The shunt 456 can also be implemented using various types and configurations of shunts depending on the application of the battery 200. The Hall effect sensor 458 can be used in the battery 200 to provide current sensing functionality and/or other types of sensing functionality. The Hall effect sensor 458 can be implemented using various types and configurations of Hall effect sensors depending on the application of the battery 200.

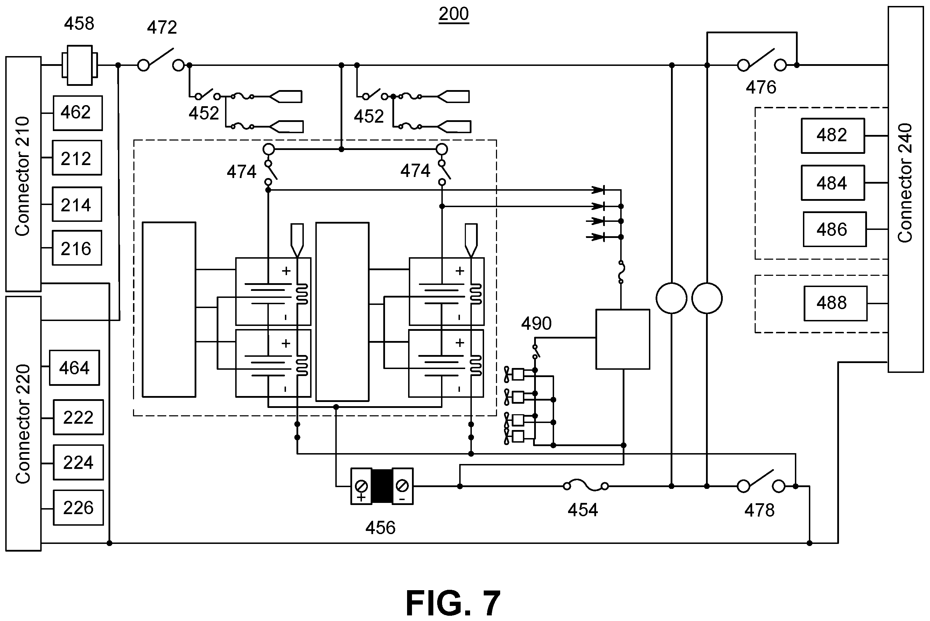

Referring to FIG. 7, an example schematic showing various components of the battery 200 is shown, in accordance with some aspects of the disclosure. From the schematic shown in FIG. 7, both the first charger connector port 210 and the second charger connector port 220 can be seen, and the proximity sensor 212, the temperature sensor 214, the temperature sensor 216, the proximity sensor 222, the temperature sensor 224, and the temperature sensor 226 can also be seen. Additionally, various example components of the electronics tray 400 can be seen, including the heater relays 452, the system fuse 454, the shunt 456, and the Hall effect sensor 458. The schematic shown in FIG. 7 also illustrates various additional example components including a truck connector port 240, a charger pilot circuit interface 462, a charger pilot circuit interface 464, a charger disconnect 472, a parallel string disconnect 474, a truck disconnect 476, a redundant disconnect 478, a termination circuit 482, a truck control interface 484, a truck wake interface 486, a truck control interface 488, and a fan disconnect 490. The schematic shown in FIG. 7 represents just one possible implementation of various aspects of the disclosure pertaining to the battery 200, and other implementations are contemplated and possible.

The main contactors 442 can include, for example, the charger disconnect contactor 472, the truck disconnect contactor 476, and/or the redundant disconnect contactor 478 as shown in FIG. 7. The charger disconnect contactor 472 can be used to disconnect components of the battery 200 in the event of overcurrent conditions that may result from the connection of the first charger device 310 and the second charger device 320 to the battery 200 via the first charger connector port 210 and the second charger connector port 220. For example, the controller 230 can receive current data from the Hall effect sensor 458 and/or other sensors included in the battery 200 and open the charger disconnect contactor 472 responsive to the determining that the current data exceeds one or more thresholds. The truck disconnect contactor 476 can be used to disconnect components of the battery 200 and/or the material handling vehicle 100 in the event of overcurrent conditions that may occur within the battery 200 and/or the material handling vehicle 100. For example, the controller 230 can receive data from the Hall effect sensor 458 and/or other sensors included in the battery 200 and open the truck disconnect contactor 346 responsive to the determining that the sensor data exceeds one or more thresholds. The redundant disconnect contactor 478 can likewise be used to disconnect components of the battery 200 and/or the material handling vehicle 100 in the event of overcurrent conditions that may occur within the battery 200 and/or the material handling vehicle 100. For example, the controller 230 can receive data from the Hall effect sensor 358 and/or other sensors included in the battery 200 and open the redundant disconnect contactor 478 responsive to the determining that the sensor data exceeds one or more thresholds.

The series contactors 444 can include, for example, the string disconnect contactors 474 as shown in FIG. 7. The string disconnect contactors 474 can be used to cut off current flow to and/or from the battery cells of the battery 200 to disconnect components of the battery 200 and/or the material handling vehicle 100 in the event of overcurrent conditions that may occur within the battery 200. As shown in the schematic of FIG. 7, the string disconnect contactors 474 can include a first contactor that is connected to a first row of battery cells and a second contactor that is connected in parallel with the first contactor and to a second row of battery cells. The controller 230 can receive data from the Hall effect sensor 458 and/or other sensors included in the battery 200, and open one or more of the string disconnect contactors 474 responsive to the determining that the sensor data exceeds one or more thresholds, for example.

The charger pilot circuit interface 462 can include circuitry for providing a charging interface between the first charger device 310 and the battery 200. The charger pilot circuit interface 464 can similarly include circuitry for providing a charging interface between the second charger device 320 and the battery 200. The proximity sensor 212 and the proximity sensor 222 can again provide proximity sensing functionality such that the battery 200 and, more specifically, the controller 230 can detect the presence of a connection between a charger device (e.g., the first charger device 310, the second charger device 320) and the battery 200. The temperature sensor 214, the temperature sensor 216, the temperature sensor 224, and the temperature sensor 226 can again provide temperature sensing functionality such that the battery 200 and, more specifically, the controller 230 can detect temperatures associated with the first charger connector port 210 and the second charger connector port 220, respectively.

The termination circuit 482 can be included in the battery 200 to provide an endpoint (termination) of a communication bus of the battery 200 (e.g., a CAN bus). The truck control interface 484 can be included in the battery 200 in order to provide a control interface between the battery 200 and the material handling vehicle 100 (e.g., via the truck connector port 240). The truck wake interface 486 can be used to communicate a wake signal (e.g., power on signal) to the battery 200 via the material handling vehicle 100 (e.g., upon power up of the material handling vehicle 100). The truck control interface 488 can again be included in the battery 200 in order to provide a control interface between the battery 200 and the material handling vehicle 100. In particular, the truck control interface 484 can provide a Public Standard Interface (PSI) option, whereas the truck control interface 488 can provide a Power Source Limited (PSL) interface option for the battery 200. The fan disconnect 490 can be controlled by the controller 230 to operate (e.g., turn on/off, etc.) one or more fans included in the battery 200 to provide heat transfer within the battery 200.

The design of the battery 200 can allow the battery 200 to be configurable for different vehicle applications and physical installation locations without hardware modification or flashing of unique BMS firmware. The battery 200 can be configured via a service tool (e.g., a software tool) that enables selection of settings that correspond to the intended application for the battery 200 at various times during the lifecycle of the battery 200 (e.g., shortly after production, before installation in the material handling vehicle 100, etc.). Additionally, the battery 200 can provide notifications related to the state of charge (SOC) of the battery 200. When the SOC of the battery 200 falls below a configurable threshold, the controller 230 can cause a notification to be presented in various manners. For example, the controller 230 send a control signal to a controller on the material handling vehicle 100 via the truck connector port 240 that causes the material handling vehicle 100 to display a notification related to the SOC of the battery 200. As another example, the controller 230 can cause a notification related to the SOC of the battery 200 to be presented on a display of the battery 200 itself.

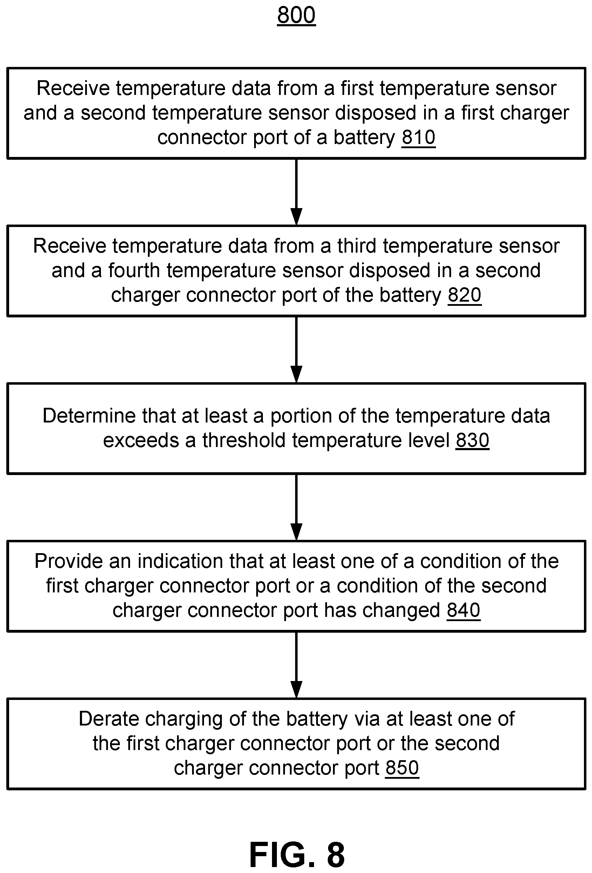

Referring to FIG. 8, a flowchart illustrating an example process 800 for managing the first charger connector port 210 and the second charger connector port 220 within the battery 200 is shown, in accordance with some aspects of the disclosure. The process 800 can be performed by the controller 230 based on data received from the temperature sensor 214, the temperature sensor 216, the temperature sensor 224, and/or the temperature sensor 226, for example. As a result of implementing the process 800, the controller 230 can not only manage the battery 200 (including the first charger connector port 210 and the second charger connector port 220), but the controller 230 can also manage the material handling vehicle 100, the charger device 310, and the charger device 320. By implementing the process 800, the controller 230 can both provide indications indicating that the first charger connector port 210 and/or the second charger connector port 220 have changed in condition and derate charging of the battery 200 based on the temperature data received from the temperature sensor 214, the temperature sensor 216, the temperature sensor 224, and/or the temperature sensor 226. The functionality provided by the process 800 can enable flexibility for the battery 200 by allowing the battery 200 to be used with different types of connectors and chargers.

At step 810, the process 800 can include receiving temperature data from both a first temperature sensor and a second temperature sensor disposed in a first charger connector port of a battery. For example, the controller 230 can receive temperature data from both the temperature sensor 214 and the temperature sensor 216 disposed in the first charger connector port 210 of the battery 200. As noted above, the temperature sensor 214 and the temperature sensor 216 can be implemented using various suitable types and configurations of temperature sensors, (e.g., using thermistors, thermocouples, resistance temperature detectors (RTDs), semiconductors, etc.). Additionally, the temperature sensor 214 and the temperature sensor 216 can be strategically located within the first charger connector port 210 such that the temperature sensor 214 and the temperature sensor 216 can provide temperature data to the controller 230 that is indicative of a change in condition or a potential change in condition to the first charger connector port 210. The controller 230 can receive the temperature data from the temperature sensor 214 and the temperature sensor 216 in various ways (e.g., through detection of a variable resistance, etc.).

At step 820, the process 800 can include receiving temperature data from both a third temperature sensor and a fourth temperature sensor disposed in a second charger connector port of the battery. For example, the controller 230 can receive temperature data from the temperature sensor 224 and the temperature sensor 226 disposed in the second charger connector port 220 of the battery 200. As noted above, the temperature sensor 224 and the temperature sensor 226 can be implemented using various suitable types and configurations of temperature sensors (e.g., using thermistors, thermocouples, RTDs, semiconductors, etc.). The temperature sensor 224 and the temperature sensor 226 can be strategically located within the second charger connector port 220 such that the temperature sensor 224 and the temperature sensor 226 can provide temperature data to the controller 230 that is indicative of a change in condition or a potential change in condition to the second charger connector port 220. The controller 230 can receive the temperature data from the temperature sensor 224 and the temperature sensor 226 in various ways (e.g., through detection of a variable resistance, etc.).

At step 830, the process 800 can include determining that at least a portion of the temperature data exceeds a threshold temperature level. For example, the controller 230 can determine that the temperature data received from at least one of the temperature sensor 214, the temperature sensor 216, the temperature sensor 224, or the temperature sensor 226 exceeds a threshold temperature level. The controller 230 can compare the temperature data received from the temperature sensor 214, the temperature sensor 216, the temperature sensor 224, and the temperature sensor 226 to one or multiple thresholds, and the one or multiple thresholds can be set and/or adjusted during operation of the battery 200 based on various factors. For example, the controller 230 can use a first threshold temperature level to trigger an indication and a second threshold temperature level to trigger derating of charging, or the controller 230 can use a single threshold temperature level to both trigger an indication and trigger derating of charging.

The threshold temperature levels can vary depending on factors including: (a) the type of material(s) used to implement the first charger connector port 210, the second charger connector port 220, the first charger device 310 (and/or the mating plate 312), and/or the second charger device 320 (and/or the mating plate 322); (b) the type and modular configuration of battery cells used in the battery 200 (e.g., capacity, energy density, voltage range, nominal voltage, weight, 1x2 cell configuration, 2x2 cell configuration, 2x3 cell configuration, etc.); (c) the sampling time period used by the controller 230 for the temperature data received from the temperature sensor 214, the temperature sensor 216, the temperature sensor 224, and the temperature sensor 226, and/or other potential factors.

At step 840, the process 800 can include providing an indication that at least one of a condition of the first charger connector port or a condition of the second charger connector port has a changed. For example, the controller 230 can provide an indication that at least one of a condition of the first charger connector port 210 or a condition of the second charger connector port 220 has changed responsive to determining that the temperature data received from at least one of the temperature sensor 214, the temperature sensor 216, the temperature sensor 224, or the temperature sensor 226 exceeds a threshold temperature level at step 830. The temperature data received from the temperature sensor 214, the temperature sensor 216, the temperature sensor 224, and the temperature sensor 226 can indicate that the first charger connector port 210 and/or the second charger connector port 220, respectively, are worn, for example, among other possible changes in condition that can occur for the first charger connector port 210 and the second charger connector port 220 themselves.

The indication provided by the controller at step 840 can then be used to initiate an action (e.g., replacing the first charger connector port 210 and/or the second charger connector port 220, disabling the first charger connector port 210 and/or the second charger connector port 220, using a different type of charge connector on the battery 200, using a different type of charger device with the battery 200, etc.) to remedy the change in condition. The controller 230 can provide the indication at step 840 in various suitable manners. For example, the controller 230 can cause an indication to be presented on a display of the battery 200, cause an indication to be displayed on a display of the material handling vehicle 100 (e.g., by a sending a signal to a controller on the material handling vehicle 100), cause an indication sound to be played, cause an indication to be presented via a computing device (e.g., by sending a signal to a server and/or sending a signal to the computing device (e.g., a mobile phone, a tablet, a personal computer, a wearable device, etc.)), and/or other suitable methods for providing the indication at step 840.

At step 850, the process 800 can include derating charging of the battery via at least one of the first charger connector port or the second charger connector port. For example, the controller can derate charging of the battery 200 via at least one of the first charger connector port 210 or the second charger connector port 220 responsive to determining that the temperature data received from at least one of the temperature sensor 214, the temperature sensor 216, the temperature sensor 224, or the temperature sensor 226 exceeds a threshold temperature level at step 830. The controller can derate the charging of the battery 200 via at least one of the first charger connector port 210 or the second charger connector port 220 by reducing the amount of current drawn by the battery 200 from the first charger device 310 and/or the second charger device 320 (e.g., by sending a signal to the charger pilot circuit interface 462). For example, responsive to determining that the temperature data received from at least one of the temperature sensor 214, the temperature sensor 216, the temperature sensor 224, or the temperature sensor 226 exceeds a threshold temperature level at step 830, the controller 230 can derate the charging of the battery 200 via the first at least one of the first charger connector port 210 or the second charger connector port 220 by reducing the amount of current drawn by the battery 200 from the first charger device 310 and/or the second charger device 320 from 200-300 amperes down to 50-150 amperes.

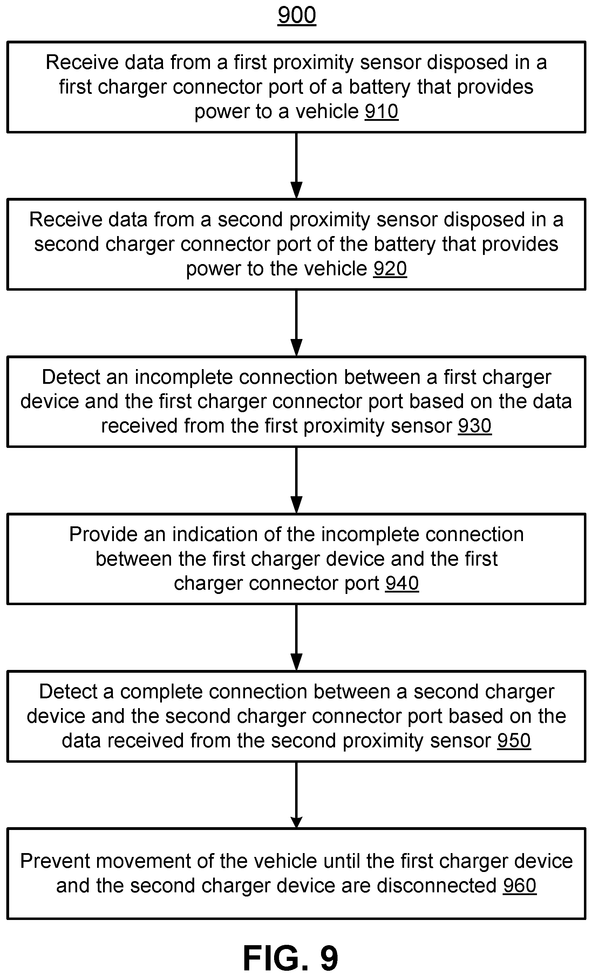

Referring to FIG. 9, a flowchart illustrating an example process 900 for managing the battery 200 and the material handling vehicle 100 during charging of the battery 200 is shown, in accordance with some aspects of the disclosure. The process 900 can also be performed by the controller 230 based on data received from the proximity sensor 212 and the proximity sensor 214, for example. As a result of implementing the process 900, the controller 230 can not only manage the battery 200 (including the first charger connector port 210 and the second charger connector port 220), but the controller 230 can also manage the material handling vehicle 100, the charger device 310, and the charger device 320. By implementing the process 900, the controller 230 can provide indications indicating the presence of an incomplete connection between the first charger device 310 and the first charger connector port 210 and/or an incomplete connection the second charger device 320 and the second charger connector port 220. Additionally, by implementing the process 900, the controller 230 can prevent movement of the material handling vehicle 100 when at least one of the first charger device 310 or the second charger device 320 is connected to the battery 200.

At step 910, the process 900 can include receiving data from a first proximity sensor disposed in a first charger connector port of a battery that provides power to a vehicle. For example, the controller 230 can receive data from the proximity sensor 212 disposed in the first charger connector port 210 of the battery 200 that provides power to the material handling vehicle 100. The proximity sensor 212 disposed in the first charger connector port 210 of the battery 200 can be implemented using various suitable types and configurations of proximity sensors. For example, the proximity sensor 212 can be implemented as a capacitive of an inductive proximity sensor, among other possibilities. The controller 230 can receive the data from the proximity sensor 212 disposed in the first charger connector port 210 of the battery 200 in a variety of suitable manners.

At step 920, the process 900 can include receiving data from a second proximity sensor disposed in a second charger connector port of the battery that provides power to the vehicle. For example, the controller 230 can receive data from the proximity sensor 222 disposed in the second charger connector port 220 of the battery 200 that provides power to the material handling vehicle 100. The proximity sensor 222 disposed in the second charger connector port 210 of the battery 200 can also be implemented using various suitable types and configurations of proximity sensors. For example, the proximity sensor 222 can be implemented as a capacitive of an inductive proximity sensor, among other possibilities. The controller 230 can receive the data from the proximity sensor 222 disposed in the second charger connector port 220 of the battery 200 in a variety of suitable manners.

At step 930, the process 900 can include detecting an incomplete connection between a first charger device and the first charger connector port based on the data received from the first proximity sensor. For example, the controller 230 can detect an incomplete connection between the first charger device 310 and the first charger connector port 210 of the battery 200 based on the data received from the proximity sensor 212 at step 910. The mating plate 312 that can be affixed to the first charger device 310 can trip the proximity sensor 212 upon a connection between the first charger device 310 and the first charger connector port 210. Then, the proximity sensor 212 can provide data to the controller 230 indicating both (a) whether the first charger device 310 is connected to the first charger connector port 210 of the battery 200, and (b) whether the connection between the first charger device 310 and the first charger connector port 210 of the battery 200 is complete or is incomplete based on the positioning of the mating plate 312 relative to the proximity sensor 212. Accordingly, based on the data from the proximity sensor 212, the controller 230 can detect the incomplete connection between the first charger device 310 and the first charger connector port 210 at step 930.

At step 940, the process 900 can include providing an indication of the incomplete connection between the first charger device and the first charger connector port. For example, the controller 230 can provide an indication of the incomplete connection between the first charger device 310 and the first charger connector port 210 detected at step 930. Due to the incomplete connection between the first charger device 310 and the first charger connector port 210, charging delays may be experienced for the battery 200 (e.g., by the operator of the material handling vehicle 100). Accordingly, the indication provided at step 940 can improve charging efficiency for the battery 200. The controller 230 can provide the indication at step 940 in various suitable manners. For example, the controller 230 can cause an indication to be presented on a display of the battery 200, cause an indication to be displayed on a display of the material handling vehicle 100 (e.g., by a sending a signal to a controller on the material handling vehicle 100), cause an indication sound to be played, cause an indication to be presented via a computing device (e.g., by sending a signal to a server, by sending a signal to the computing device (e.g., a mobile phone, a tablet, a personal computer, a wearable device, etc.)), and/or other suitable methods for providing the indication at step 940. By providing the indication at step 940, the battery 200 can cause the operator of the material handling vehicle 100 to complete the connection between first charger device 310 and the first charger connector port 210.

At step 950, the process 900 can include detecting a complete connection between a second charger device and the second charger connector port based on the data received from the second proximity sensor. For example, the controller 230 can detect a complete connection between the second charger device 320 and the second charger connector port 220 of the battery 200 based on the data received from the proximity sensor 222 at step 920. The mating plate 322 that can be affixed to the second charger device 320 can trip the proximity sensor 222 upon a connection between the second charger device 320 and the second charger connector port 220. Then, the proximity sensor 222 can provide data to the controller 230 indicating both (a) whether the second charger device 320 is connected to the second charger connector port 220 of the battery 200, and (b) whether the connection between the second charger device 320 and the second charger connector port 220 of the battery 200 is complete or is incomplete based on the positioning of the mating plate 322 relative to the proximity sensor 222. Accordingly, based on the data from the proximity sensor 222, the controller 230 can detect the complete connection between the second charger device 320 and the second charger connector port 220 at step 950.

At step 960, the process 900 can include preventing movement of the vehicle until the first charger and the second charger are removed from the first charger connector port and the second charger connector port. For example, the controller 230 can prevent movement of the material handling vehicle 100 until the first charger device 310 is fully removed from the first charger connector port 210 of the battery 200 and the second charger device 320 is fully removed from the second charger connector port 220 of the battery 200. The controller 230 can prevent movement of the material handling vehicle 100 until the first charger device 310 is fully removed from the first charger connector port 210 of the battery 200 and the second charger device 320 is fully removed from the second charger connector port 220 of the battery 200 in various suitable manners. For example, the controller 230 can send a signal to the material handling vehicle 100 (e.g., to a vehicle controller on the material handling vehicle 100) to prevent movement of the material handling vehicle 100 until the first charger device 310 is fully removed from the first charger connector port 210 of the battery 200 and the second charger device 320 is fully removed from the second charger connector port 220 of the battery 200 .

It should be noted that, while the steps of the process 800 and the process 900 are shown in a particular order in FIG. 8 and FIG. 9, respectively, the process 800 and the process 900 may not include all steps shown, may include additional steps, or may include the steps in a different order.

While various spatial and directional terms, such as top, bottom, lower, mid, lateral, horizontal, vertical, front, and the like may be used to describe examples of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

Within this specification, aspects have been described in a way which enables a clear and concise specification to be written, but it is intended and will be appreciated that aspects may be variously combined or separated without parting from the present disclosure. For example, it will be appreciated that all preferred features described herein are applicable to all aspects of the disclosed technology described herein.

Thus, while the disclosed technology has been described in connection with particular aspects and examples, the disclosed technology is not necessarily so limited, and that numerous other aspects, examples, uses, modifications and departures from the aspects, examples, and uses are intended to be encompassed by the claims attached hereto. The entire disclosure of each patent and publication cited herein is incorporated by reference, as if each such patent or publication were individually incorporated by reference herein.

Various features and advantages of the present disclosure are set forth in the following claims.

## Claims

1. A battery (200) for a material handling vehicle (100), comprising:
a charger connector port (210) connectable to a charger device (310) to charge the battery (200), the charger connector port (210) comprising a proximity sensor (212) and a temperature sensor (214); and
a controller (230) communicatively coupled to the proximity sensor (212) and the temperature sensor (214), the controller (230) comprising circuitry configured to:
prevent movement of the material handling vehicle (100) when the proximity sensor (212) indicates that the charger device (310) is connected to the charger connector port (210); and
provide an indication that a condition of the charger connector port (210) has changed based on temperature data received from the temperature sensor (214).

2. The battery (200) of claim 1, wherein:
the battery (200) comprises a second charger connector port (220) connectable to a second charger device (320) to charge the battery (200), the second charger connector port (220) comprising a second proximity sensor (222) and a second temperature sensor (224) that are communicatively coupled to the controller (230); and
the circuitry of the controller (230) is configured to:
prevent movement of the material handling vehicle (100) when the second proximity sensor (222) indicates that the second charger device (320) is connected to the second charger connector port (220); and
provide an indication that a condition of the second charger connector port (220) has changed based on second temperature data received from the second temperature sensor (224).

3. The battery (200) of claim 2, wherein a charge rate for the battery (200) is greater when both the charger device (310) is connected to the charger connector port (210) and the second charger device (320) is connected to the second charger connector port (220) than when either the charger device (310) is connected to the charger connector port (220) or the second charger device (320) is connected to the second charger connector port (220).

4. The battery (200) of claim 2 or 3, wherein the circuitry of the controller (230) is configured to provide an indication of an incomplete connection between the second charger device (320) and the second charger connector port (220) based on data received from the second proximity sensor (222).

5. The battery (200) of any of the claims 1 to 4, wherein the circuitry of the controller (230) is configured to provide an indication of an incomplete connection between the charger device (310) and the charger connector port (210) based on data received from the proximity sensor (212).

6. The battery (200) of any of the claims 1 to 5, wherein the circuitry of the controller (230) is configured to provide the indication that the condition of the charger connector port (210) has changed via a display of the battery (200).

7. The battery of any of the claims 1 to 6, wherein the circuitry of the controller (230) is configured to provide the indication that the condition of the charger connector port (210) has changed via a display of the material handling vehicle (100).

8. The battery of any of the claims 1 to 7, wherein, to provide the indication that the condition of the charger connector port (210) has changed, the circuitry of the controller (230) is configured to determine that the temperature data received from the temperature sensor (214) exceeds a threshold.

9. The battery of any of the claims above, wherein, responsive to providing the indication that the condition of the charger connector port (210) has changed based on the temperature data received from the temperature sensor (214), the circuitry of the controller (230) is configured to reduce an amount of current drawn by the battery (200) via the charger connector port (210).

10. The battery (200) of any of the claims 2 to 9, wherein, responsive to providing the indication that the condition of the second charger connector port (220) has changed based on the second temperature data received from the second temperature sensor (224), the circuitry of the controller (230) is configured to reduce an amount of current drawn by the battery (200) via the second charger connector port (220).

11. The battery (200) of any of the claims 2 to 10, wherein:
the charger connector port (210) comprises a third temperature sensor (216) that is communicatively coupled to the controller (230); and
the circuitry of the controller (230) is configured to provide the indication that the condition of the charger connector port (210) has changed based on third temperature data received from the third temperature sensor (216).

12. The battery (200) of claim 11, wherein, responsive to providing the indication that the condition of the charger connector port (210) has changed based on the third temperature data received from the third temperature sensor (216), the circuitry of the controller (230) is configured to reduce an amount of current drawn by the battery (200) via the charger connector port (210).

13. The battery (200) of claim 11 or 12, wherein:
the second charger connector port (220) comprises a fourth temperature sensor (226) that is communicatively coupled to the controller (230); and
the circuitry of the controller (230) is configured to provide the indication that the condition of the second charger connector port (220) has changed based on fourth temperature data received from the fourth temperature sensor (226).

14. The battery (200) of claim 13, wherein, responsive to providing the indication that the condition of the second charger connector port (220) has changed based on the fourth temperature data received from the fourth temperature sensor (216), the circuitry of the controller (230) is configured to reduce an amount of current drawn by the battery (200) via the second charger connector port (220).

15. The battery (200) of any of the preceding claims, comprising one or more lithium iron phosphate (LFP) battery cells.
